Europäisches Patentamt

European Patent Office

Office européen des brevets

(11) Publication number: **0 047 670**
**B1**

(12) **EUROPEAN PATENT SPECIFICATION**

(45) Date of publication of patent specification: **04.12.85**

(51) Int. Cl.⁴: **F 16 H 47/08, B 60 K 41/22**

(21) Application number: **81304111.8**

(22) Date of filing: **08.09.81**

(54) **Control system for automatic transmission with overdrive device.**

(30) Priority: **09.09.80 JP 125436/80**
**09.09.80 JP 125437/80**

(43) Date of publication of application:
**17.03.82 Bulletin 82/11**

(45) Publication of the grant of the patent:
**04.12.85 Bulletin 85/49**

(84) Designated Contracting States:
**DE FR GB IT SE**

(56) References cited:
**DE-A-1 650 840**
**GB-A-2 017 837**
**US-A-3 228 496**
**US-A-4 160 392**

**DEUTSCHE DIN NORMEN, Entwurf DIN 24300,**
**Blatt 4, 1973**

(73) Proprietor: **FUJI JUKOGYO KABUSHIKI KAISHA**
**7-2 Nishishinjuku 1-chome Shinjuku-ku**
**Tokyo (JP)**

(72) Inventor: **Takano, Toshio**
**1-3-2 Sakaecho Hamuramachi**
**Nishitama-gun Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to an automatic transmission provided with the overdrive device of the type in which a torque converter, an automatic transmission and a final reduction gear are integrally assembled.

In a conventional automatic transmission with an overdrive device, a planetary gear device is used for increasing the rotation speed of the output of the transmission. Owing to such a construction, a pair of planetary gear devices must be provided on an axis, which further requires the provision of at least two transmitting devices comprising a clutch band and one-way clutch. Such a construction makes the apparatus large and complicated, which also causes complication of hydraulic control system. In a vehicle with an automatic transmission, because the change gear is automatically actuated, it is desirable that overdrive transmission can also be automatically performed from any transmission step and returning to normal transmission may be achieved in response to vehicle speed when the overdrive condition is released by means of "kickdown".

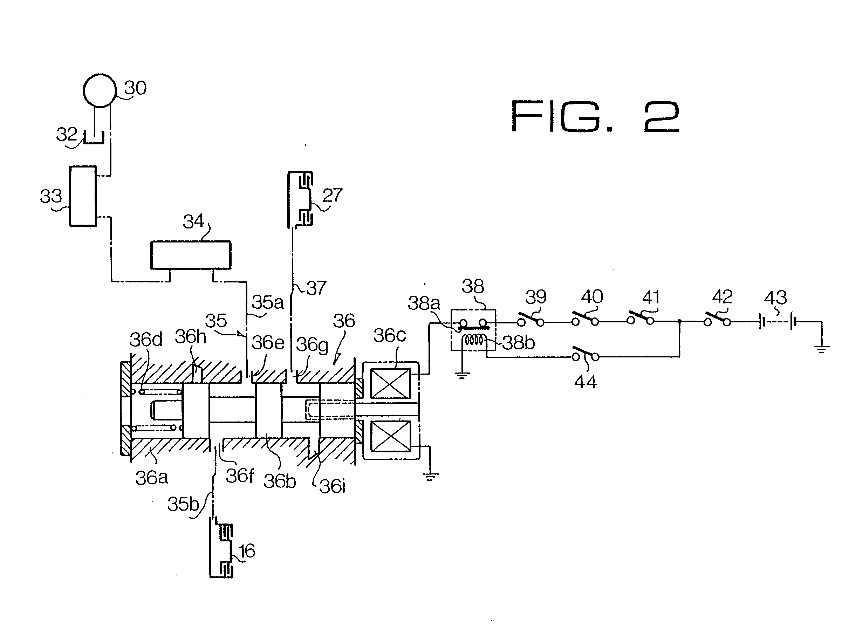

British Patent Application No. 20 17 837A from which are e.g. known the features of the precharacterising part of claim 1 includes such an overdrive device including a planetary gear drive 16, and the transmitting devices: (Figure 2) clutches 23, 24, brake 37, one-way clutch 36 or (Figure 4) clutch 48, brake 49, one-way clutch 54. According to Table 1 of GB—A—20 17 837 *three* transmitting devices 23, 24, 49 are engaged during the overdrive (4th gear) driving condition.

Considering these situations, the present invention seeks to provide a control system for an automatic transmission in which the overdrive transmission is performed through the automatic transmission and an overdrive device comprising only one overdrive clutch and overdrive gears.

Accordingly the present invention provides an overdrive transmission control system for a motor vehicle having an automatic transmission operatively connected with an output shaft of the engine, and including a torque converter, a turbine shaft connected with a turbine of the torque converter, a forward clutch mounted on the turbine shaft and selectively connected with a main transmission of the automatic transmission, a final reduction device for transmitting the output of the forward clutch to a differential mechanism through an output shaft of the main transmission, and an overdrive device, including an overdrive clutch and overdrive gear train; characterised by:

an intermediate shaft solely used for transmitting the output torque of said overdrive device mounted on an extending portion of said turbine shaft to said final reduction device, said intermediate shaft being spaced from the output shaft of the turbine, said overdrive device comprising a train of gears between the axes of said shaft,

overdrive valve means including a solenoid valve for selectively actuating said forward clutch and said overdrive clutch by oil pressure pressurised by an oil pump through a manual valve and an oil pressure regulating valve,

switching means including a drive-range switch which is closed by the shifting operation of said main transmission, a governor switch which is closed when the vehicle speed reaches a predetermined high value suitable for overdrive operation, and a manual overdrive switch adapted to be closed by the vehicle operator,

said switches being connected in series to actuate the solenoid valve of the overdrive valve means so as to disengage the forward clutch and engage the overdrive clutch.

One embodiment of the present invention will now be described by way of example with reference to the accompanying drawings in which:

Figure 1 is a diagrammatic cross-sectional view showing an example of an automatic transmission apparatus with an overdrive device to which the present invention is applied;

Figure 2 shows a control circuit for the apparatus of Figure 1; and

Figure 3 is a graph showing automatic shift characteristics.

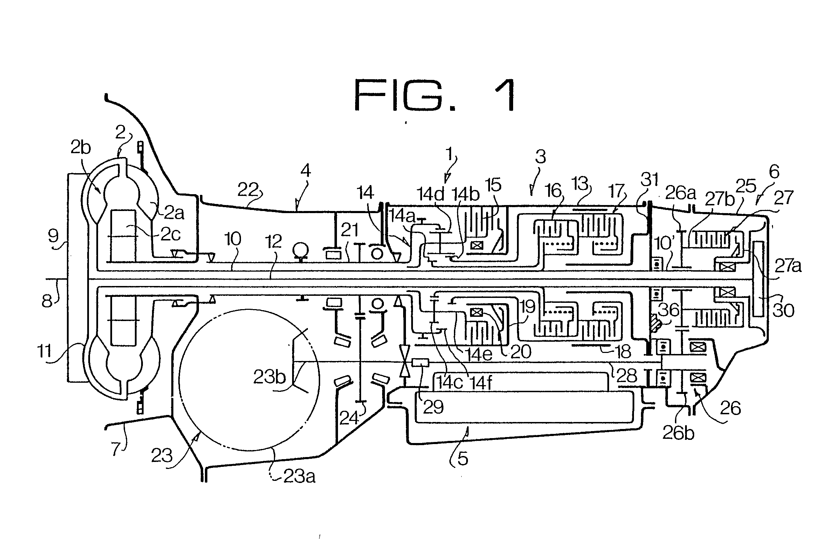

In Figure 1, numeral 1 generally designates a trans-axle type transmission for driving the front wheel of a vehicle which comprises a torque converter 2, three-speed automatic transmission device 3, a final reduction device 4 disposed between the automatic transmission apparatus 3 and the torque converter 2, a valve block 5 of hydraulic control means provided in a lower part of the automatic transmission device 3, and an overdrive device 6 arranged in a rear part of automatic transmission apparatus 3 opposite the torque converter 2.

The torque converter 2 is in a converter housing 7 containing a pump impeller 2a, a turbine 2b and a stator 2c. The pump impeller 2a is in direct connection with an engine crankshaft 8 through a drive plate 9. A turbine shaft 10 extends from the turbine 2b and an oil pump driving shaft 12 extends from a converter cover 11 provided integrally with the drive plate 9. The pump impeller 2a is rotated by the engine through the crankshaft 8 to rotate the turbine 2b by the oil flow regulated by the stator 2c.

The automatic transmission apparatus 2 has a transmission case 13 in which a planetary gear 14, and a low-and-reverse brake 15, a forward clutch 16, and reverse clutch 17 are arranged in that order. The turbine shaft 10 connected to the torque converter 2 is connected to a forward sun gear 14a of the planetary gear 14 through the forward clutch 16, and at the same time connected to a reverse sun gear 14b through the reverse clutch 17 to apply the output of the turbine shaft 10 thereto. Further, a brake band 18 is provided on the drum side of the reverse clutch 17 to lock the reverse sun gear 14b. In the planetary gear 14, a short pinion 14c engaging with the sun gear 14a and a long pinion 14d engaging with the sun gear 14b are supported in a carrier 14e which supports the low-and-reverse brake 15. The carrier is locked by a one-way clutch 20 provided between the low-and-reverse brake 15 and a centre support 19. An output shaft 21 is extended from a ring gear 14f engaging with the long pinion 14d to the torque converter.

The front-wheel final reduction device 4 has a case 22 secured between the converter housing 7 and the transmission case 13. The case 22 contains a crown gear 23a of a differential mechanism 23 for front-wheels under units including the turbine shaft 10. Output shaft 21 is coupled with a drive pinion 23b through a reduction gear 24 for transmitting the power to the crown gear 23a.

Further, the valve block 5 of hydraulic control device contains therein various valves and oil passages (not shown). The hydraulic control device is adapted to supply or discharge the pressure oil to or from servo mechanism of the low-and-reverse brake 15 and clutches 16, 17 and the brake band 18 of the automatic transmission apparatus 3 in accordance with the transmitting pattern according to the relation between vehicle speed and engine load.

The overdrive device 6 of the present invention is provided within a transmission cover 25 which is fixed to the rear end of the transmission case 13. The turbine shaft 10 extends into the transmission cover 25 to form an extension 10'. An overdrive gear device 26 and an overdrive clutch 27 are disposed on the extension 10'. The overdrive gear device 26 comprises a large drive gear 26a and a small driven gear 26b which engage with each other. The drive gear 26a is rotatably mounted on the extension 10' and the driven gear 26b is secured to a rearward extension of the drive pinion 23b, so that a speed-up gear device is provided. An overdrive clutch 27, which is hydraulic, comprises a drum 27a secured to the extension 10' and a hub 27b secured to the drive gear 26a, and is adapted to establish or cut off the connection of the shaft 10 with drive gear 26a. Further, the driven gear 26b is connected to the drive pinion 23b of the front-wheel final reduction device 4 through an intermediate shaft 28 and a spline joint 29. An oil pump 30 is attached to the cover 25 and connected to the oil pump drive shaft 12.

A clutch support 31 is provided with a valve 36 for changing of overdrive.

Referring to Figure 2, the pressure of oil pumped up by the oil pump 30 is adjusted by a pressure regulating valve 33 to produce line pressure. The line pressure is supplied to the forward clutch 16 through an oil passage 35 and the valve 36 by the operation of a manual valve 34 during forward driving. The overdrive valve 36 is provided in the oil passage 35 for communicating to the forward clutch 16 through a passage 35b and to the overdrive clutch 27 through a passage 37. The overdrive valve 36 is not provided in the valve block 5 which includes the pressure regulating valve 33 and the manual valve 34, but is mounted on the clutch support 31 provided between the valve block 5 and the forward clutch 16 in the automatic transmission as shown in Figure 1. The overdrive valve 36 comprises a valve body 36a, a valve spool 36b inserted slidably within the body 36a, a solenoid 36c on the right side of the body 36a and a spring 36d in the left side of the body 36a. When the spool 36b is urged rightwards by the spring 36d, port 36e and port 36g are respectively communicated with port 36f and drain port 36i as shown in Figure 2. Leftward movement of spool 36b by the solenoid 36c causes the port 36f to communicate with a drain port 36h, the port 36e to communicate with the port 36g, and at the same time blocks the drain port 36i. The solenoid 36c of the overdrive valve 36 is electrically connected to a battery 45 through contacts 38a of a relay 38, a governor switch 39 which turns on when the vehicle speed reaches a predetermined high value suitable for overdrive, a D-range switch 40 which is turned on by the shift operation to a D-range between 1st- and 2nd-speeds, an overdrive switch 41 which is operated manually, and an ignition switch 42. Further, a kickdown switch 44 which is turned on by a kickdown operation is provided between the ignition switch 42 and a coil 38b of the relay 38. When the kickdown switch is turned on, the coil 38b is excited to open the contacts 38a.

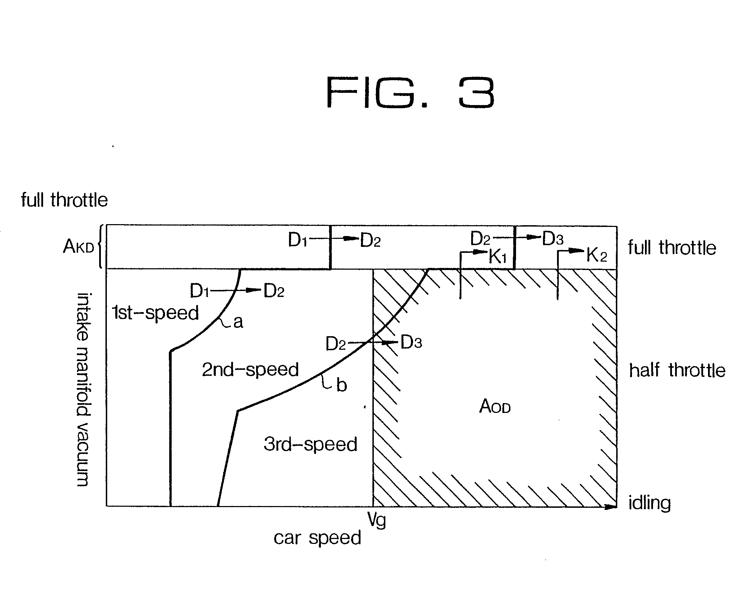

Automatic shift characteristics of the system in upshift operation is shown in Figure 3. The vehicle speed $V_g$ at which the governor switch 39 is operated is set to such a value that the overdrive range $A_{OD}$ shown by the hatched zone in Figure 2 occupies a high speed range in the 3rd-speed including a part of 2nd-speed range and is in a range in which the intake manifold vacuum level is higher than in the kickdown range $A_{KD}$ by the kickdown switch 44.

As a consequence of this construction unless the overdrive switch 41 is operated, the solenoid 36c is not excited, if the vehicle speed reaches the preset high speed to close the governor switch 39. Therefore, the overdrive clutch 27 is in communication with the drain port 36i as shown in Figure 2. Consequently oil is discharged from the overdrive clutch 27 through the drain port 36i to release the overdrive clutch to disengage the overdrive gear device 26 from the turbine shaft 10. On the other hand, the forward clutch 16 communicates with the manual valve 34 through ports 36f, 36e, and oil passages 36b, 35a, and is supplied with oil. Therefore, the power transferred from the engine crankshaft 8 to the turbine shaft 10 through the torque converter 2 is further transmitted to the forward sun gear 14a in the planetary gear 14 of the automatic transmission to establish forward driving. When the intersection of the vehicle speed and intake manifold vacuum level is to the left of the curve a in Figure 3, the one-way clutch 20 locks the carrier 14e to transmit power at the largest gear ratio on the output shaft 21 from the ring gear 14f. The power is further transmitted to the front-wheels through the reduction gear 24 and the differential mechanism 23 to drive the vehicle in the 1st speed range.

When the vehicle is accelerated to a higher speed beyond the curve *a* of the automatic shift characteristics, valves in the valve block 5 of the hydraulic control system are actuated to engage the brake band 18 to lock the reverse sun gear 14b of the automatic transmission apparatus. Therefore, the 2nd-speed driving condition at a gear ratio lower than the above-mentioned ratio is established. Further, when the vehicle speed is increased beyond the curve *b* in Figure 3, the reverse clutch 17 engages instead of the brake band 18 and receives simultaneously from both sun gears 14a and 14b of the planetary gear 14, and consequently, the output shaft 21 comes into direct connection with turbine shaft 19. Thus, the power on the turbine shaft 10 is transmitted to the wheels in the same manner as mentioned above to establish the 3rd-speed driving condition. The speed changing is thus carried out by the automatic transmission apparatus between the 1st-speed driving condition, 2nd-speed driving condition, both of which have a large reducing gear ratio and the 3rd-speed driving condition in which there is a direct connection with the turbine shaft.

As a result of the "kickdown" operation, i.e. when the accelerator pedal is depressed to the wide open throttle position for rapid acceleration corresponding to the kickdown range $A_{KD}$ of Figure 3, the 3rd-speed drive ratio will be changed down to the 2nd-speed drive ratio and the 2nd-speed drive ratio to the 1st-speed drive ratio, in accordance with the characteristics of the curves *a*, *b* of the automatic shift characteristics.

On the other hand, if the overdrive switch 41 is kept turned on during high speed driving and the governor switch 39 is turned on at a predetermined set value $V_g$, the solenoid 36c of the overdrive valve 36 is energised to move the valve spool 36b leftwards. Thus, the oil passage 35a comes into communication with the overdrive clutch 27 through ports 36e, 36g, and the forward clutch 16 is communicated with the drain port 36h. Thus, the forward clutch 16 is disengaged to thereby cut the power to the forward sun gear 14a of the planetary gear 14, disabling the automatic transmission. On the other hand, being supplied with oil, the overdrive clutch 27 is engaged to transmit the power on the turbine shaft 10 to the overdrive gear device 26. The power is transmitted to the drive pinion 23b of the differential mechanism 23 through the intermediate shaft 28, and is further transmitted to the front wheels through the crown gear 23a. Thus, the drive ratio is automatically changed to the overdrive ratio.

Although the overdrive ratio is mainly engaged from the 3rd-speed of the gearbox, i.e. the highest speed range, it can also be engaged in the 2nd-speed range at a wide open throttle setting, as is clear from the overdrive range $A_{OD}$ in Figure 3. As the vehicle speed is reduced and the governor switch 29 is turned off, the solenoid 36 is de-energised. Thus, the overdrive valve 36 returns to the normal position, so that the vehicle is driven by the automatic transmission.

If the kickdown switch is turned on by the above-mentioned kickdown operation whilst the gearbox is in overdrive, contacts 38a in the relay 38 are disengaged to de-energise the solenoid 36c. Therefore, the overdrive transmission is cut off. Then, according to the vehicle speed at that time, the transmission is automatically shifted down to the 2nd-speed as shown by the arrow $K_1$ or to the 3rd-speed by the arrow $K_2$ of Figure 3.

In the overdrive condition, the power on the turbine shaft 10 is transmitted to the reverse sun gear 14b of the planetary gear 14 by the engagement of reverse clutch 17 at the 3rd-speed, or the reverse sun gear 14b is locked by the clamping of the brake band 18 at the 2nd-speed, so that the high speed of rotation is transmitted from the differential mechanism 232 to the planetary gear 14 through the reduction gear 24 and the output shaft 21. However, since the carrier 14e idles because of non-operating condition of the one-way clutch 20 and low-and-reverse brake 15, no detrimental effect is caused.

As described above, the overdrive drive 6 comprises the overdrive gear device 26 having a pair of gears 26a, 26b engaging with each other and overdrive clutch 27, and the single overdrive valve 36, and the overdrive valve 36 controls the supply and discharge of oil to and from the overdrive clutch 27 and forward clutch 16. Thus, the construction of transmission control system is simple and reliable operation can be expected.

It will be noted, if governor switch 39, D-range switch 40 and relay contacts 38a are omitted, the overdrive condition is provided by manually operating the overdrive switch 41.

**Claims**

1. A transmission control system for a motor vehicle having an automatic transmission (3) operatively connected with an output shaft of the engine, and including a torque converter (2), a turbine shaft (10) connected with a turbine of the torque converter, a forward clutch (16) mounted on the turbine shaft and selectively connected with a main transmission of the automatic transmission, a final reduction device (4) for transmitting the output of the forward clutch to a differential mechanism (23) through an output shaft of the main transmission, and an overdrive device (6) including an overdrive clutch (27) and overdrive gear train (26a, 26b); characterised by:

an intermediate shaft (28) solely used for transmitting the output torque of said overdrive device mounted on an extending portion of said turbine shaft to said final reduction device, said intermediate shaft (28) being spaced from the output shaft (10) of the turbine, said overdrive device comprising a train of gears between the axes of said shafts (10, 28),

overdrive valve means including a solenoid valve (36) for selectively actuating said forward clutch and said overdrive clutch by oil pressure pressurised by an oil pump (30) through a manual valve (34) and an oil pressure regulating valve (33),

switching means including a drive-range switch (40) which is closed by the shifting operation of said main transmission, a governor switch (39) which is closed when the vehicle speed reaches a predetermined high value suitable for overdrive operation, and a manual overdrive switch adapted to be closed by the vehicle operator,

said switches being connected in series to actuate the solenoid valve of the overdrive valve means so as to disengage the forward clutch and engage the overdrive clutch.

2. An overdrive transmission control system according to claim 1 wherein said switching means further includes a kickdown switch (44), and relay means operated by said kickdown switch so as to turn off said solenoid valve when the kickdown switch is operated during overdrive operation.

## Revendications

1. Un système de commande de transmission pour un véhicule à moteur comportant une transmission automatique (3) accouplée fonctionnellement à un arbre de sortie du moteur, et comprenant un convertisseur de couple (2), un arbre de turbine (10) accouplé à une turbine du convertisseur de couple, un embrayage de marche avant (16) monté sur l'arbre de turbine et accouplé sélectivement à une transmission principale de la transmission automatique, un dispositif réducteur final (4) destiné à transmettre la puissance de sortie de l'embrayage de marche avant à un différentiel (23) par l'intermédiaire d'un arbre de sortie de la transmission principale, et un dispositif de surmultiplication (6) comprenant un embrayage de surmultiplication (27) et un train d'engrenages de surmultiplication (26a, 26b); caractérisé par:

un arbre intermédiaire (28) utilisé exclusivement pour transmettre au dispositif réducteur final le couple de sortie du dispositif de surmultiplication, monté sur une partie en prolongement de l'arbre de turbine, cet arbre intermédiaire (26) étant espacé par rapport à l'arbre de sortie (10) de la turbine, et le dispositif de surmultiplication comprenant un train d'engrenages entre les axes de ces arbres (10, 28),

des moyens à valves de surmultiplication comprenant une électrovalve (36) destinée à actionner sélectivement l'embrayage de marche avant et l'embrayage de surmultiplication, sous l'effet d'une pression d'huile produite par une pompe à huile (30), par l'intermédiaire d'une valve manuelle (34) et d'une valve de régulation de pression d'huile (33),

des moyens de commutation comprenant un interrupteur de plage de conduite normale (40) qui est fermé par l'opération de changement de vitesses de la transmission principale, un interrupteur de régulateur (39) qui est fermé lorsque la vitesse du véhicule atteint une valeur élevée prédéterminée qui convient pour le fonctionnement dans les conditions de surmultiplication, et un interrupteur manuel de surmultiplication, prévu pour être fermé par l'opérateur du véhicule,

ces interrupteurs étant connectés en série de façon à actionner l'électrovalve des moyens à valves de surmultiplication, afin de débrayer l'embrayage de marche avant et d'embrayer l'embrayage de surmultiplication.

2. Un système de commande de transmission avec surmultiplication selon la revendication 1, dans lequel les moyens de commutation comprennent en outre un rétrocontact (44) et un relais actionné par le rétrocontact de façon à désexciter l'électrovalve lorsque le rétrocontact est actionné pendant le fonctionnement dans les conditions de surmultiplication.

## Patentansprüche

1. Getriebe-Steuervorrichtung für ein Motorfahrzeug mit einem automatischen Getriebe (3), das antriebsmäßig mit der Ausgangswelle eines Motors verbunden ist, und welche Getriebe-Steuervorrichtung einen Drehmomentwandler (2), eine mit der Turbine des Drehmomentwandlers verbundene Turbinenwelle (10), eine auf der Turbinenwelle befestigte und mit einem Hauptübertragungsweg des automatischen Getriebes selektiv verbundene Vorwärtskupplung (16), ein abschließendes Untersetzungsgetriebe (4) zum Übertragen der Ausgangsbewegung der Vorwärtskupplung an ein Differential (23) über eine Ausgangswelle des Hauptübertragungsweges und eine Overdrive-Vorrichtung (6) einschließlich einer Overdrive-Kupplung (27) und einer Overdrive-Getriebekette (26a, 26b) aufweist;

gekennzeichnet durch eine Zwischenwelle (28), die ausschließlich zum Übertragen des Ausgangsdrehmomentes der auf einem verlängerten Teil der Turbinenwelle befestigten Overdrive-Vorrichtung an das abschließende Untersetzungsgetriebe vorgesehen und die gegenüber der Ausgangswelle (10) der Turbine im Abstand angeordnet ist, wobei die Overdrive-Vorrichtung eine Getriebekette zwischen den Achsen der beiden Wellen (10, 28) aufweist;

eine Overdrive-Ventilanordnung, die ein Magnetventil (36) zum wahlweisen Betätigen der Vorwärtskupplung und der Overdrive-Kupplung durch Öldruck aufweist, der durch eine Ölpumpe (30) über ein manuelles Ventil (34) und ein Öldruck-Regulierventil (33) erzeugt wird;

eine Schaltvorrichtung, die einen beim Schaltvorgang des Hauptübertragungsweges schließenden Fahrbereichschalter (40), einen bei Erreichen einer für den Overdrive-Betrieb genügend hohen, bestimmten Geschwindigkeit des Fahrzeuges schließenden Geschwindigkeitsschalter (39) und einen durch den Fahrzeugführer manuell betätigbaren Overdrive-Schalter aufweist;

wobei die Schalter in Serie geschaltet sind, um das Magnetventil der Overdrive-Ventilanordnung zum Auskuppeln der Vorwärtskupplung und zum Einkuppeln der Overdrive-Kupplung zu betätigen.

2. Getriebe-Steuervorrichtung nach Anspruch 1, dadurch gekennzeichnet, daß die Schaltvorrichtung außerdem einen Kick-Down-Schalter (44) und eine Relaisanordnung aufweist, die durch den Kick-Down-Schalter betätigt wird und das Magnetventil ausschaltet, wenn der Kick-Down-Schalter während des Overdrive-Betriebes betätigt wird.

FIG. 1

FIG. 2

# FIG. 3

full throttle

intake manifold vacuum

$A_{KD}$ { ... $D_1 \longrightarrow D_2$ ... $D_2 \longrightarrow D_3$ ... $\longrightarrow K_1$ ... $\longrightarrow K_2$ full throttle

$D_1 \longrightarrow D_2$

1st-speed

a

2nd-speed

$D_2 \longrightarrow D_3$

half throttle

b

3rd-speed

$A_{OD}$

idling

Vg

car speed